# EUROPÄISCHE PATENTANMELDUNG

(11) **EP 3 669 972 A1**
(43) Veröffentlichungstag der Anmeldung: **24.06.2020**
(21) Anmeldenummer: 18214266.1
(22) Anmeldetag: 19.12.2018
(51) Int. Cl.: B01D 67/00, B01D 69/02, B01D 69/14, B01D 61/02

(54) **FILTERMEMBRAN**

(71) Anmelder: MCI Management Center Innsbruck - Internationale Hochschule GmbH, 6020 Innsbruck (AT)
(72) Erfinder: KOCH, Marc, 6622 Berwang (AT); SPRUCK, Martin, 6114 Kolsass (AT); RUPPRICH, Marco, 6094 Axams (AT); BACK, Jan, 6020 Innsbruck (AT); RAUTER, Marcus, 6020 Innsbruck (AT)
(74) Vertreter: Schwarz & Partner Patentanwälte OG

(57) **Zusammenfassung**

Verfahren zur Herstellung einer Filtermembran, wobei zuerst eine Suspension, umfassend (a) eine Lösung eines Polymers in einem Lösungsmittel, eines Porenbildners (b) eines im der Lösung suspendierten Adsorbens und gegebenenfalls (c) Zusatzstoffe bereitgestellt wird, wobei die Filtermembran mittels Phaseninversion aus dem Lösungsmittel abgeschieden wird, sodass eine Polymermatrix gebildet und das Adsorbens in die Polymermatrix eingebettet wird.

## Beschreibung

Die vorliegende Erfindung betrifft ein Verfahren zur Herstellung einer Filtermembran aus einer Lösung eines Polymers und eines Porenbildners in einem Lösungsmittel. Weiters betrifft die Erfindung eine Filtermembran, eine Flachmembran sowie eine Mehrkanalmembran.

### Hintergrund der Erfindung

Abwasserreinigungsanlagen gemäß Stand der Technik sind auf die Entfernung von Nährstoffen, abbaubaren organischen Verbindungen und Feststoffen ausgelegt. Eine Vielzahl organischer Spurenstoffe, die potentiell schädlich sind, werden nicht oder unvollständig abgebaut oder nicht vollständig adsorptiv entfernt. Diese Spurenstoffe gelangen in die Umwelt, wo sie ihre Wirkung auf Gewässerorganismen oder über den Kreislauf der Wassernutzung beim Menschen entfalten können.

Der Einsatz von Membrantechnologien zur Entfernung organischer Spurenstoffe aus dem Wasser wird bereits seit längerem untersucht. Membranen können ohne großen Aufwand in Abwasserabflussanlagen integriert werden und weisen Abtrennungseigenschaften auf, die von ihrer "Porengröße" (Cut-off) abhängen. Für die Entfernung von organischen Spurenstoffen sind sehr kleine Porenweiten (Nanofiltration) notwendig, wie sie auch in der Trinkwasseraufbereitung zum Einsatz kommen, wogegen Mikrofiltrationsmembranen keinen weitergehenden Rückhalt aufweisen.

Der große Druckverlust beim Einsatz von Membranen mit geringem Cut-Off in der Abwassertechnik stellt hierbei eine große Herausforderung dar und verhindert bis dato eine breitere Anwendung.

Aus WO 2005/011839 A1 ist ein keramisches Filterelement bekannt, welches von einem Aktivkohlefilterelement umhüllt ist. In US 2017/0240449 A1 wird ein Filterelement beschrieben, welches Abschnitte mit keramischem Aufbau und Abschnitte mit Aktivkohle aufweist. Die in diesen Dokumenten beschriebenen Filterelemente zeigen gute Abtrennungseigenschaften von organischen Spurenstoffen in Abwässern, sie sind allerdings kostenintensiv und anfällig für mechanische Beschädigungen.

US 2016/0158707 A1 zeigt eine Mehrkanalmembran, die allerdings keinen Rückhalt für organische Spurenstoffe bietet.

### Kurzbeschreibung der Erfindung

Aufgabe der vorliegenden Erfindung ist die Bereitstellung einer Filtermembran, welche eine gute und selektive Abtrennung von anthropogenen, organischen Spurenstoffen ermöglicht und auf einen möglichst einfachen und kostengünstigen Einsatz abgestimmt ist.

Gelöst wird diese Aufgabe durch eine Filtermembran, umfassend eine Polymermatrix, dadurch gekennzeichnet, dass die Polymermatrix Poren und
- 3 bis 70 Gew. % Adsorbens, vorzugsweise 40 bis 60 Gew. % Adsorbens,
- 0 bis 5 Gew. % Zusatzstoffe,
- 0 bis 5 Gew.% Porenbildner,
- Rest Polymer,
aufweist, wobei das Adsorbens und gegebenenfalls die Zusatzstoffe und gegebenenfalls der Porenbildner in die Polymermatrix eingebettet sind.

Es konnte von den Erfindern gezeigt werden, dass eine Polymermatrix, welche Poren aufweist, wobei in der Polymermatrix ein Adsorbens eingebettet ist, hervorragende Abtrennungseigenschaften für organische Spurenstoffe aufweist. Gleichzeitig lässt sich eine solche Filtermembran einfach herstellen und sie ist sowohl chemisch als auch mechanisch vergleichsweise stabil. Im Sinne der Erfindung ist unter dem Begriff in die Polymermatrix eingebettet gemeint, dass das Adsorbens vom Polymer teilweise umschlossen ist und nicht nur an der Oberfläche angeordnet ist. Aufgrund des Herstellungsverfahrens mittels Phaseninversion (siehe unten) können große Mengen an Adsorbens in die Polymermatrix eingebracht werden. Die Zusatzstoffe können die Stabilität der Polymermatrix erhöhen. Das Adsorbens konnte bis 70 Gew. % eingebracht werden, wobei die Stabilität ab 60 Gew. % Adsorbens abnimmt. Die besten Ergebnisse konnten erzielt werden, wenn das Verhältnis zwischen Polymer und Adsorber im Bereich 1:0,80 bis 1:1,20 liegt.

Bevorzugt ist das Polymer ausgewählt aus der Gruppe umfassend Polyethersulfon (PES), Polysulfon (PS), Polypropylen (PP), Polyvinylidenfluorid (PVDF). PVDF ist im Gegensatz den anderen Polymeren chemisch stabiler, allerdings hat sich PES als chemisch und thermisch ausreichend stabil und weniger anfällig für Membranfouling verglichen mit anderen Polymeren erwiesen. Das Polymer ist daher bevorzugt PES.

Bevorzugt ist das Adsorptionsmittel ausgewählt aus der Gruppe Aktivkohle, Vergaserkohle, Zeolithe oder Mischungen daraus. Unter Vergaserkohle wird Kohle aus einem Vergaserprozess, beispielsweise einem Holzvergasungsprozess, verstanden.

Der Porenbildner ist bevorzugt Polyvinylpyrrolidon (PVP). In der fertigen Filtermembran ist das Vorhandensein des Porenbildners zwar nicht Voraussetzung, allerdings wirken sich Reste aus dem Herstellungsprozess grundsätzlich nicht negativ aus über die Laufzeit der Filtermembran betrachtet können solche Reste sogar den Vorteil bieten, dass diese während des Betriebs der Filtermembran herausgelöst und dadurch neue Poren gebildet werden. Durch Membran-Fouling würde die Porenzahl bzw. das Porenvolumen grundsätzlich zurückgehen, allerdings kann die Porenzahl bzw. das Porenvolumen durch Neubildung von Poren einigermaßen konstant gehalten werden.

Die Filtermembran weist bevorzugt eine Permeabilität bezogen auf reines Wasser von 20 bis 1000 L/m² h bar bei 20 °C auf.

Bevorzugt weist die Filtermembran eine Ausschlussgrenze (Molecular-weight-cut-off) von 10 000 Da auf.

Im Rahmen der Erfindung ist außerdem eine Flachmembran, umfassend eine Filtermembran der vorgenannten Art, vorgesehen.

Bevorzugt betrifft die Erfindung eine Mehrkanalmembran, umfassend eine Filtermembran der vorgenannten Art. Eine Mehrkanalbahn ist vom Prinzip in der US 2016/0158707 A1 beschrieben. Die Mehrkanalmembran erlaubt eine inside-out oder outside-in Filtration.

Weiters ist eine Filtereinrichtung, umfassend eine Filtermembran oder eine Mehrkanalmembran oder eine Flachmembran der vorgenannten Art vorgesehen.

Gemäß der Erfindung ist außerdem ein Verfahren zur Herstellung einer Filtermembran vorgesehen, wobei zuerst eine Suspension, umfassend (a) eine Lösung eines Polymers in einem Lösungsmittel, eines Porenbildners (b) eines im der Lösung suspendierten Adsorbens und gegebenenfalls (c) Zusatzstoffe bereitgestellt wird, wobei die Filtermembran mittels Phaseninversion aus dem Lösungsmittel abgeschieden wird, sodass eine Polymermatrix gebildet und das Adsorbens in die Polymermatrix eingebettet wird.

Beim Herstellungsverfahren wird zunächst eine Lösung des Polymers und des Porenbildners in einem geeigneten Lösungsmittel bereitgestellt und das Adsorbens in dieser Lösung suspendiert. Anschließend wird mittels eines Phaseninversionsschritts die Filtermembran hergestellt. Hierbei wird der Porenbildner bereits so herausgelöst, dass sich Poren bilden. Teilweise zurückbleibender Porenbildner in der Polymermatrix kann z.B. durch ein Oxidationsmittel entfernt werden. Hierfür kann beispielsweise eine Lösung eines Hypochlorits verwendet werden.

Die Phaseninversion kann auf beliebige, bekannte Art und Weise erfolgen. Eine mögliche Phaseninversion kann z.B. durch Zugabe eines Nichtlösungsmittels wie Wasser erfolgen. Zusätzlich kann die Temperatur verändert werden, um die Löslichkeit zu verringern.

Das Polymer kann ausgewählt sein aus der Gruppe umfassend Polyethersulfon (PES), Polysulfon (PS), Polypropylen (PP), Polyvinylidenfluorid (PVDF), vorzugsweise PES.

Das Adsorptionsmittel kann ausgewählt sein aus der Gruppe Aktivkohle, Vergaserkohle, Zeolithe oder Mischungen daraus.

Bevorzugt ist vorgesehen, dass der Porenbildner Polyvinylpyrrolidon (PVP) ist.

Als Lösungsmittel ist beispielsweise N,N-Dimethylacetamid (DMAc) geeignet.

Bevorzugt weist die Suspension eine Zusammensetzung bestehend aus
(a) einer Lösung von
   - 10 bis 30 Gew.% des Polymers,
   - 1 bis 10 Gew.% des Porenbildners,
   - 0 bis 5 Gew.% Zusatzstoffe
   - Rest Lösungsmittel,
(b) 1 bis 30 Gew.%, vorzugweise 1 bis 20 Gew.% eines Adsorbens, bezogen auf die Lösung, wobei das Adsorbens in der Lösung suspendiert ist, auf.

Für das Herstellungsverfahren hat sich folgendes Stoffgemisch als geeignet erwiesen: Stoffgemisch, umfassend
(a) eine Lösung von
   - 10 bis 30 Gew.% des Polymers,
   - 1 bis 10 Gew.% des Porenbildners,
   - 0 bis 5 Gew.% Zusatzstoffe
   - Rest Lösungsmittel,
(b) 1 bis 30 Gew.%, vorzugweise 1 bis 20 Gew.% eines Adsorbens, bezogen auf die Lösung.

Das Polymer kann ausgewählt sein aus der Gruppe umfassend Polyethersulfon (PES), Polysulfon (PS), Polypropylen (PP), Polyvinylidenfluorid (PVDF), vorzugsweise PES.

Das Adsorptionsmittel kann ausgewählt sein aus der Gruppe Aktivkohle, Vergaserkohle, Zeolithe oder Mischungen daraus.

Bevorzugt ist vorgesehen, dass der Porenbildner Polyvinylpyrrolidon (PVP) ist.

Als Lösungsmittel ist beispielsweise N,N-Dimethylacetamid (DMAc) geeignet.

### Detaillierte Beschreibung der Erfindung

Nachfolgend wird die Erfindung genauer anhand von Figuren und der dazugehörigen Figurenbeschreibung genauer erläutert.
- Fig. 1 zeigt: eine morphologische Charakterisierung einer Filtermembranen (im Querschnitt) in Abhängigkeit der Beladung an Adsorbens.
- Fig. 2 zeigt: Permeabilitäten in Abhängigkeit der eingebetteten Menge an Adsobermaterial.
- Fig. 3 zeigt: eine Gegenüberstellung der Diclofenac-Rückhalte der eingesetzten Adsorbermaterialien und gleichen Korngrößenverteilung.
- Fig. 4 zeigt: Rasterelektronenmikroskopie-Aufnahme einer embedded Mehrkanalmembran aus Polyethersulfon mit 1 Gew.% Pulveraktivkohle.
- Fig. 5 zeigt: Rückhaltsversuche mit 15 mg/L Diclofenac mit Mehrkanalkapillarmembranen.

In Abhängigkeit der Herstellungsprozedur für Filtermembranen, werden die kritischen Einflussgrößen für die Weiterentwicklung für Nassspinnverfahren für Hohlfaser-/Kapillarmembranen verwendet. Darüber hinaus werden die Membranen rheologisch und morphologisch charakterisiert. Grundsätzlich wären einige Polymere (Polyethersulfone PES, Polysulfone PS, Polypropylen PP, Polyvinylidenfluorid PVDF, etc.) für diese spezifische Anwendung denkbar. In der gegenständlichen Erfindung haben sich die Membranen mit dem Polymer PES als besonders geeignet herausgestellt. PES lässt sich über den Phaseninversionsprozess herstellen und ist verhältnismäßig günstiger und aufwendiger in der Herstellung als beispielweise PVDF. PVDF ist im Gegensatz zu PES chemisch stabiler, allerdings ist PES im definierten Anwendungsbereich chemisch und thermisch ausreichend stabil und weniger anfällig für Membranfouling.

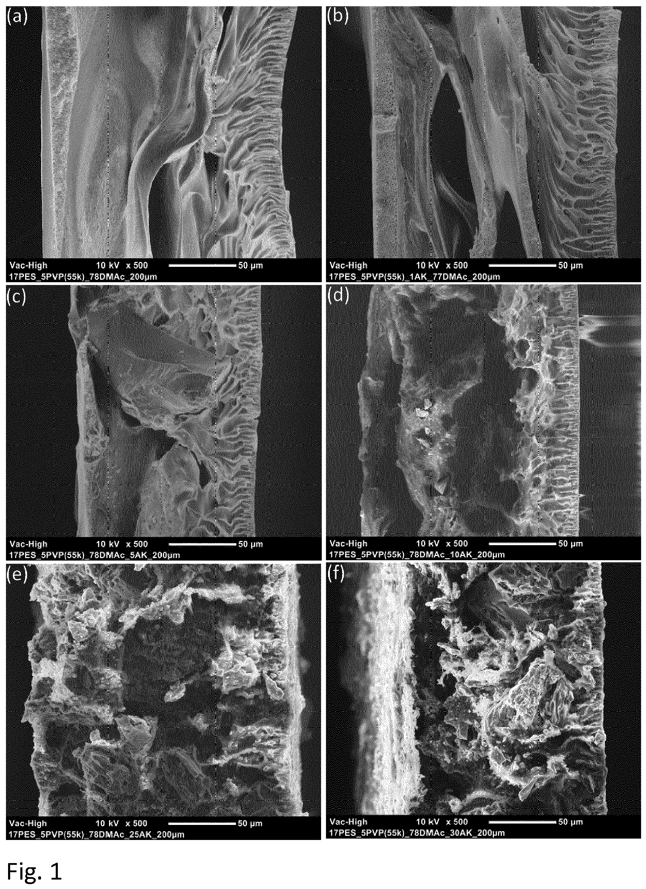

Vor der Untersuchung der embedded-Filtermembran auf deren Wirksamkeit, werden diese mittels Rasterelektronenmikroskop (REM) morphologisch charakterisiert, um Aussagen hinsichtlich poröser Polymerstruktur und Verteilung des Adsorbensmaterial ableiten zu können. Die Zusammensetzung der in Fig. 1 dargestellten Membranen ging von einer Lösung aus 17 Gew. % PES, 5 Gew.% PVP (durchschnittliches Molekulargewicht 55 kDa) und 78 Gew .% DMAc. Das Polymer Polyvinylpyrrolidon (PVP) dient bei der Membranherstellung als Porenbildner. Als Lösungsmittel wurde N,N-Dimethylacetamid (DMAc) verwendet. Die Gießlösungen wurden mit folgenden Mengen an Adsorbens versetzt: ; (a) 0 Gew.% Adsorbens, (b) 1 Gew.% Adsorbens, (c) 5 Gew.% Adsorbens, (d) 10 Gew.% Adsorbens, (e) 25 Gew.% Adsorbens, (f) 30 Gew.% Adsorbens bezogen auf die Lösung aus 17 Gew. % PES, 5 Gew.% PVP (durchschnittliches Molekulargewicht 55 kDa) und 78 Gew.% DMAc. Die homogene Lösung mit Adsorbens wurde mittels Phaseninversionsverfahren zu Flachmembranen verarbeitet. Die REM Untersuchung zeigt eine deutliche Veränderung der Membranstruktur.

Die Bildung der für asymmetrische Membranen charakteristischen Fingerstrukturen wird durch die Zugabe von Adsorbensmaterial zunehmend unterdrückt. Zudem ist erkennbar, dass die Membranporosität mit steigender Beladung abnimmt. Hinsichtlich der mechanischen Stabilität lässt die REM-Analyse für Membranen mit Adsorbensbeladungen von über 25 Gew.% (bezogen auf die Gießlösung) eine Verringerung vermuten. Im Zuge weiterführender Untersuchungen (Zugversuche) wurden die mechanischen Membraneigenschaften analysiert.

Für die erste Performance-Evaluierung werden die hergestellten embedded-Flachmembranen mit dem ausgewählten anthropogenen Spurenstoff Diclofenac als Referenzsubstanz untersucht. In weiterer Folge werden aus den Erkenntnissen der Vorversuche die embedded-Flachmembranen auf deren Wirksamkeit auf Basis der für dieses Forschungsprojekt definierten Spurenstoffe ermittelt.

Tabelle 1 zeigt den Rückhalt an Diclofenac in Abhängigkeit der Menge an eingebetteten Adsorbermaterial in die Polymermatrix (Mengenangaben bezogen auf die Gießlösung vor Phaseninversion bezogen auf eine Lösung 17 Gew. % PES, 5 Gew.% PVP (durchschnittliches Molekulargewicht 55 kDa) und 78 Gew .% DMAc). Da durch die Phaseninversion das Lösungsmittel DMAc vollständig und der Porenbildner PVP fast vollständig entfernt wird und im Wesentlichen PES zurückbleibt, ergibt sich ein Massenverhältnis von Aktivkohle zu PES von 1, 5, 10, 15 zu 17.

Die Versuchsreihen wurden bei 20 °C und 25°C und einem pH-Wert von 7,2 mit pulverisierter Aktivkohle (Epidon A - Donau Chemie AG) - AK-EA in der Tabelle - realisiert. Die Leistungs-Evaluierung erfolgt in einer Membrananlage der Firma OSMO -Membrane System GmbH (Memcell Classic) mit einer effektiven Membranfläche von 80 cm². Ferner lässt sich aus den Versuchsreihen eine signifikante Rückhalt-Tendenz als Funktion der Adsobermenge ableiten. Bei Membran EM_EA7 konnte bei einem Fluss von 570 L m⁻² h⁻¹ ein Rückhalt an Diclofenac von ca. 43 % erzielt werden.

**TABELLE 1: FLUSS UND DICLOFENAC-RÜCKHALT DER EMBEDDED-MEMBRANEN IN ABHÄNGIGKEIT DER ADSORBERMENGE (AKTIVKOHLE EPIBON A) BEI EINEM TMP VON 0,5 BAR**

| **EM No.** | **m% AK-EA** | **T [°C]** | **M_{Permeat} [g]** | **Flux [L m⁻² h⁻¹]** | **R_{(Diclofenac)} [%]** |
|---|---|---|---|---|---|
| **EM_EA1** | 1 | 25 | 40,5 | 304 | 1,50 |
| **EM_EA2** | 5 | 25 | 47,1 | 353 | 14,8 |
| **EM_EA3** | 10 | 25 | 49,5 | 371 | 29,7 |
| **EM_EA4** | 10 | 20 | 45,5 | 341 | 17,8 |
| **EM_EA5** | 10 | 20 | 55,5 | 416 | 29,4 |
| **EM_EA6** | 15 | 20 | 86,2 | 647 | 38,0 |
| **EM_EA7** | 15 | 20 | 75,8 | 569 | 42,8 |

Aufgrund der signifikanten Abhängigkeit der eingebetteten Adsorbermenge in Bezug auf Rückhalt an Diclofenac, werden weitere Versuchsreihen zur Ermittlung der Limitierung von Adsorbensmaterial in der Polymermatrix angestrebt. Bei der Herstellung der embedded-Flachmembranen kann es ab 15 Gew. % an Adsorbens (bezogen auf Gießlösung) aufgrund der Korngrößenverteilung vermehrt zur Fehlstellenbildung kommen. Dies resultiert aus der zu großen Korngröße (d₉₀ von ca. 150 µm) in Bezug auf die Membranstärke von ca. 120 µm. Für die Versuchsreihen werden die Adsorbermaterialien (Epibon A - Donau Chemie AG und Vergaserkohle - Demonstrationsanlage MCI) in einer Trockensiebung klassiert und der Siebdurchgang von definierten Intervallen (0-45 µm/ 45-63 µm/ 0-80 µm) in die Polymerlösung eingebettet, um so möglicherweise die Fehlstellen während der Herstellung zu vermeiden und darüber hinaus die Abbaurate in Abhängigkeit der Korngrößenverteilung und die daraus resultierten Permeabilitäten zu evaluieren.

Die Morphologie der embedded-Flachmembranen mit unterschiedlichen Gewichtsanteilen an Aktivkohle unterscheidet sich stark von der Referenzmembran ohne Adsorbermaterial. Ferner erhalten wir eine ähnliche Morphologie wie in Fig. 1 zu sehen bei Verwendung definierter Intervalle der Korngrößenverteilung.

### PERMEABILITÄTEN

Darüber hinaus umfassen die Experimente Messungen der Permeabilitäten der hergestellten Membranen. Aus diesen Versuchsreihen können Aussagen hinsichtlich Leistung und mechanischer Stabilität abgeleitet werden. Bei allen Messungen wird ein transmembraner Druck von 1 bar verwendet. Während der Experimente haben Flüsse und Permeabilitäten die gleichen numerischen Werte und daher werden nur die Permeabilitäten veranschaulicht.

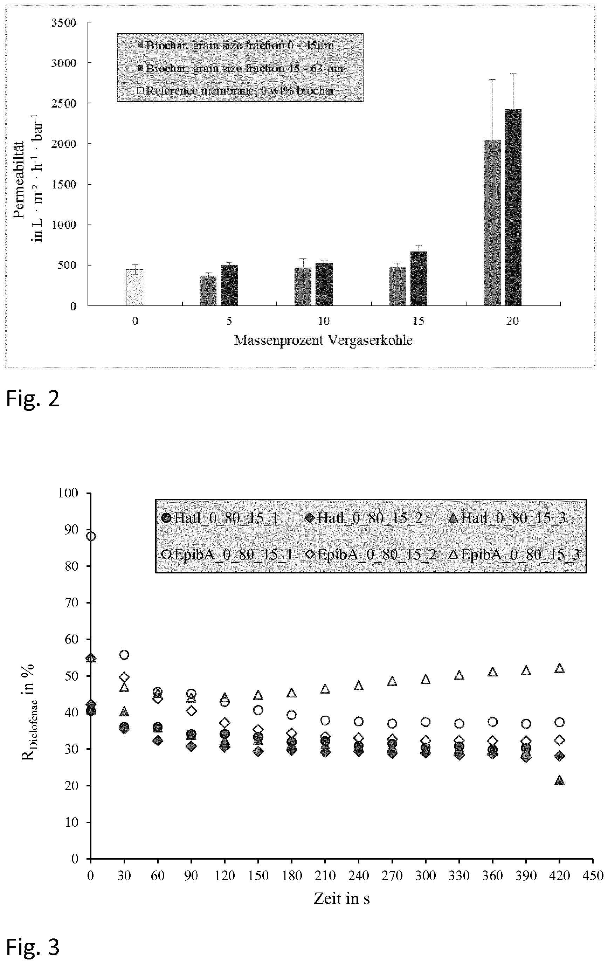

In Fig. 2 sind die Permeabilitäten in Abhängigkeit der Menge an Pulveraktivkohle, welche in die Polymermatrix eingebettet wurden. Obiges Balkendiagramm zeigt (weißer Balken) Referenzmembran und (grauer/schwarzer Balken) unterschiedliche Korngößenverteilungen und Mengenverhältnisse an Adsorbermaterial (Vergaserkohle Demonstrationsanlage Hatlerdorf - VK).

Tabelle 2 zeigt die durchschnittlichen Permeabilitäten in Abhängigkeit der jeweiligen Korngrößenverteilung, Menge und Art des Adsorbermaterials. Daraus kann abgeleitet werden, dass die Menge und Größe des gewählten Korngrößenintervalls grundsätzlich höhere Permeabilitäten liefert. Ferner haben die Versuchsreihen gezeigt das Pulveraktivkohle gegenüber der Vergaserkohle bei gleichen Korngrößenintervall signifikant höhere Permeabilitäten ausweist. Bei den durchgeführten Versuchen hat sich ferner eine Limitierung der eingebetteten Adsorbermaterialien von 20 Massenprozent ergeben. Dies resultiert daraus, dass bei Überschreitung dieser Menge die mechanische Stabilität abnimmt. Darüber hinaus resultieren aus diesen zu hohen Permeabilitäten geringere Abbauraten aufgrund der reduzierten Verweilzeiten.

**TABELLE 2: DURCHSCHNITTLICHE PERMEABILITÄTEN IN ABHÄNGIGKEIT DES MENGE UND ART DER EINGEBETTETEN ADSORBERMATERIALIEN**

| Korngröße / µm | Gew.% Adsorber | Adsorber | Permeabilität / L m⁻² h⁻¹ |
|---|---|---|---|
| Referenzmembran | 0 | - | 447,7±56,3 |
| | | | |
| 0-45 | 5 | VK | 363,9±39,5 |
| 0-45 | 10 | VK | 467,2±117,7 |
| 0-45 | 15 | VK | 474,2±48,3 |
| 0-45 | 20 | VK | 2048,6±746,1 |
| | | | |
| 45-63 | 5 | VK | 500,0±31,8 |
| 45-63 | 10 | VK | 529,8±35,9 |
| 45-63 | 15 | VK | 670,2±79,8 |
| 45-63 | 20 | VK | 2427,3±441,5 |
| | | | |
| 0-80 | 15 | VK | 679,7±37,3 |
| 0-80 | 15 | AK | 738,2±67,1 |

| | | | |
|---|---|---|---|
| VK.... Vergaserkohle | | | |

Die Wirksamkeit dieser embedded-Flachmembranen wurden auf deren Rückhalt von Diclofenac als definierte Leitsubstanz evaluiert. Dabei wurden zum einen die gewälten Adsorbermaterialien in Abhängigkeit der Menge und verwendete Korngrößenverteilung evaluiert. Bezugnehmend auf das geringer BET-Volumen und Porösität weist die Vergaserkohle vergleichbare Rückhalte an Diclofenac.

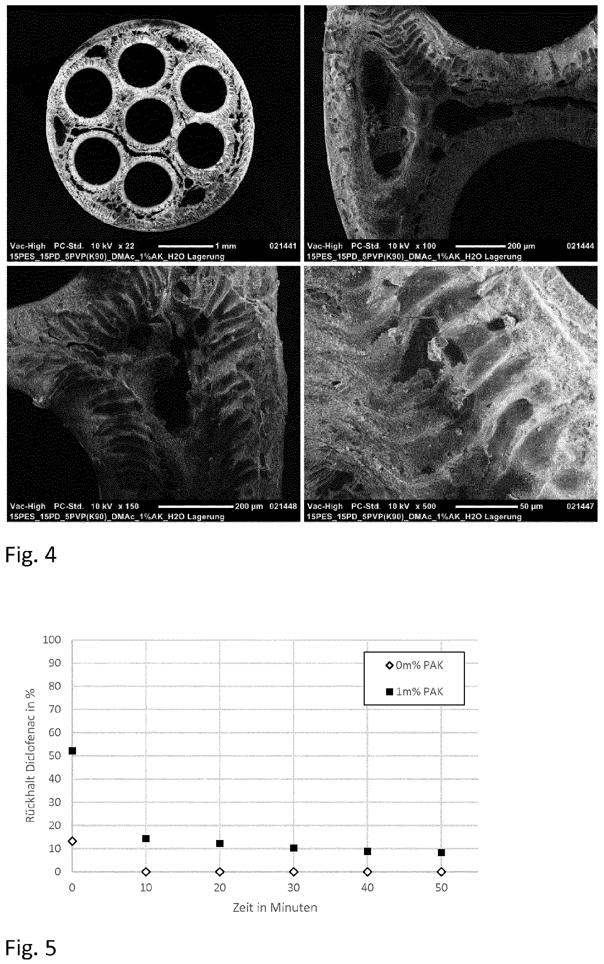

Eine Möglichkeit das Embedded-System weiterzuentwickeln stellt die Herstellung von Multi-channel-Kapillarmembranen mit eingebettetem Adsorbermaterial dar. Kapillarmembranen zeichnen sich durch eine hohe Packungsdichte aus. Durch das Mehrkanal-Design wird im Vergleich zur klassischen Einkanal-Kapillarmembran die mechanische Stabilität verbessert. Fig. 4 zeigt Rasterelektronenmikroskopie (REM)-Aufnahmen einer Polyethersulfon Multi-channel-Kapillarmembrane in welche 1 Gew.% Pulveraktivkohle in die Spinnlösung eingebracht wurde. Es ist ersichtlich, dass sich die Aktivkohlepartikel homogen in der Membranmatrix verteilen. Darüber hinaus zeigen die REM, dass die maximale Beladung der Membranstruktur noch nicht erreicht ist und die Möglichkeit zur Erhöhung der eingebetteten Adsorbermaterialmenge gegeben ist. Hinsichtlich mechanischer Stabilität wurde in den Laborversuchen keine signifikante Beeinträchtigung im Vergleich zur Referenzmembran ohne Aktivkohleeinbettung ermittelt.

### RÜCKHALT

**Tabelle 3: Ergebnisse von Reinwasserpermeabilität bei 1 bar, T=25°C und Diclofenac Rückhalt für embedded Mehrkanal-Kapillarmembranen mit 2% Pulveraktivkohle**

| Membran | Zeit in min | Fluss in l/m²h | Rückhalt in % |
|---|---|---|---|
| MCM_2%AK_V1 | 0 | 52,9 | 52,5 |
| MCM_2%AK_V1 | 10 | 65,6 | 36,1 |
| MCM_2%AK_V1 | 20 | 56,4 | 30,0 |
| MCM_2%AK_V1 | 30 | 56,7 | 27,2 |
| MCM_2%AK_V1 | 40 | 56,7 | 23,8 |
| MCM_2%AK_V1 | 50 | 56,2 | 21,6 |
| MCM_2%AK_V1 | 60 | 56 | 19,2 |
| MCM_2%AK_V2 | 0 | 63,2 | 53,8 |
| MCM_2%AK_V2 | 10 | 66,8 | 40,3 |
| MCM_2%AK_V2 | 20 | 66,1 | 31,9 |
| MCM_2%AK_V2 | 30 | 67,1 | 26,8 |
| MCM_2%AK_V2 | 40 | 66 | 24,1 |
| MCM_2%AK_V2 | 50 | 65,2 | 21,7 |
| MCM_2%AK_V2 | 60 | 65,7 | 19,6 |
| MCM_2%AK_V3 | 0 | 53,3 | 71,6 |
| MCM_2%AK_V3 | 10 | 56,1 | 45,1 |
| MCM_2%AK_V3 | 20 | 56 | 36,1 |
| MCM_2%AK_V3 | 30 | 57,1 | 30,2 |
| MCM_2%AK_V3 | 40 | 56,4 | 26,6 |
| MCM_2%AK_V3 | 50 | 56,4 | 23,7 |
| MCM_2%AK_V3 | 60 | 56,4 | 21,6 |

**Tabelle 4: Parameter der Polymerlösung und finalen embedded Membranen**

| **Parameter** | **Charakteristik** |
|---|---|
| MWCO | > 10 000 g/mol |
| Viskosität | 300 - 20 000 mPas bei Scherrate von 200 s⁻¹, *T* = 20 °C |
| Reinwasserpermeabilität | 20 - 1000 L/m² h bar |

Fig. 5 zeigt das Ergebnis der Rückhaltsversuche von einer embedded Multi-channel-Kapillarmembran mit 1m% Pulveraktivkohle (PAK) sowie der Referenzmembran ohne eingebettetes Adsorbermaterial. Die Masse der Pulveraktivkohle ist dabei auf die Gesamtmasse des Membranspinnversuchs bezogen. Als Feedkonzentration wurden jeweils 15 mg/L Diclofenac verwendet. Es ist ersichtlich, dass sowohl die embedded-Membran als auch die Referenzmembran zu Beginn des Versuchs einen Rückhalt für Diclofenac aufweisen. Der Rückhalt der Polyethersulfon-Referenzmembran von 13,2% kann durch Wechselwirkungen des Membran- und Hilfspolymers (Polyvinylpyrrolidon) erklärt werden. Die embedded-Kapillarmembran zeigt mit 52,2 % einen deutlich erhöhten Diclofenac-Rückhalt. Dieser Unterschied ist durch das zusätzliche Adsorbermaterial erklärbar und zeigt, dass Einbettung von Pulveraktivkohle zur einer Spurenstoffabtrennung führt. Im weiteren Versuchsverlauf sinkt der Diclofenac-Rückhalt bei der Referenzmembran ohne PAK auf 0 % ab. Die Ergebnisse zeigen, dass die Beladungskapazität für das Material der reinen Polymermembran innerhalb von wenigen Minuten erreicht wird. Im Gegensatz dazu zeigt die embedded-Multi-channel-Kapillarmembran über den gesamten Versuchszeitraum eine Diclofenac-Abtrennung. Die Ergebnisse zeigen, dass Mehrkanal-Kapillarmembranen mit eingebetteter Pulveraktivkohle in der Lage sind Spurenstoffe aus wässrigen Lösungen abzutrennen. Hinsichtlich einer Optimierung der Membran in Bezug auf eine Steigerung des erzielbaren Rückhalts sind weitere Versuche erforderlich. Dabei sollen unter anderem der Aktivkohleanteil erhöht und die Polymerzusammensetzung untersucht werden.

## Patentansprüche

1. Verfahren zur Herstellung einer Filtermembran, wobei zuerst eine Suspension, umfassend (a) eine Lösung eines Polymers in einem Lösungsmittel, eines Porenbildners (b) eines im der Lösung suspendierten Adsorbens und gegebenenfalls (c) Zusatzstoffe bereitgestellt wird, wobei die Filtermembran mittels Phaseninversion aus dem Lösungsmittel abgeschieden wird, sodass eine Polymermatrix gebildet und das Adsorbens in die Polymermatrix eingebettet wird.

2. Verfahren nach Anspruch 1, **dadurch gekennzeichnet, dass** die Phaseninversion die Zugabe eines Nichtlösungsmittels umfasst.

3. Stoffgemisch, umfassend
(a) eine Lösung von
• 10 bis 30 Gew.% des Polymers,
• 1 bis 10 Gew.% des Porenbildners,
• 0 bis 5 Gew.% Zusatzstoffe
• Rest Lösungsmittel,
(b) 1 bis 30 Gew.%, vorzugweise 1 bis 20 Gew.% eines Adsorbens, bezogen auf die Lösung, wobei das Adsorbens im Lösungsmittel suspendiert vorliegt.

4. Stoffgemisch nach Anspruch 3, **dadurch gekennzeichnet, dass** das Polymer ausgewählt ist aus der Gruppe umfassend Polyethersulfon (PES), Polysulfon (PS), Polypropylen (PP), Polyvinylidenfluorid (PVDF), vorzugsweise PES.

5. Stoffgemisch nach Anspruch 3 oder Anspruch 4, **dadurch gekennzeichnet, dass** das Adsorptionsmittel ausgewählt ist aus der Gruppe Aktivkohle, Vergaserkohle, Zeolithe oder Mischungen daraus.

6. Stoffgemisch nach einem der Ansprüche 3 bis 5, **dadurch gekennzeichnet, dass** der Porenbildner Polyvinylpyrrolidon (PVP) ist.

7. Stoffgemisch nach einem der Ansprüche 3 bis 6, **dadurch gekennzeichnet, dass** Lösungsmittel N,N-Dimethylacetamid (DMAc) ist.

8. Filtermembran, umfassend eine Polymermatrix, **dadurch gekennzeichnet, dass** die Polymermatrix Poren und
• 3 bis 70 Gew. % Adsorbens, vorzugsweise 40 bis 60 Gew. % Adsorbens,
• 0 bis 5 Gew. % Zusatzstoffe,
• 0 bis 5 Gew.% Porenbildner,
• Rest Polymer,
aufweist, wobei das Adsorbens und gegebenenfalls die Zusatzstoffe und gegebenenfalls der Porenbildner in die Polymermatrix eingebettet sind.

9. Filtermembran nach Anspruch 8, **dadurch gekennzeichnet, dass** das Adsorptionsmittel ausgewählt ist aus der Gruppe Aktivkohle, Vergaserkohle, Zeolithe oder Mischungen daraus.

10. Filtermembran nach Anspruch 8 oder Anspruch 9, **dadurch gekennzeichnet, dass** das Polymer ausgewählt ist aus der Gruppe umfassend Polyethersulfon (PES), Polysulfon (PS), Polypropylen (PP), Polyvinylidenfluorid (PVDF), vorzugsweise PES.

11. Filtermembran nach einem der Ansprüche 8 bis 10, **dadurch gekennzeichnet, dass** der Porenbildner Polyvinylpyrrolidon (PVP) ist.

12. Filtermembran nach einem der Ansprüche 8 bis 11, **gekennzeichnet durch** eine Permeabilität bezogen auf reines Wasser von 20 bis 1000 L/m² h bar.

13. Filtermembran nach einem der Ansprüche 8 bis 12, **gekennzeichnet durch** eine Ausschlussgrenze (Molecular-weight-cut-off) von 10 000 Da.

14. Flachmembran oder Mehrkanalmembran, umfassend eine Filtermembran nach einem der Ansprüche 8 bis 13.

15. Filtrationseinrichtung, umfassend eine Filtermembran nach einem der Ansprüche 8 bis 13 oder eine Flachmembran oder eine Mehrkanalmembran nach Anspruch 14.
